# EUROPÄISCHE PATENTSCHRIFT

(11) **EP 0 366 911 B1**
(45) Veröffentlichungstag und Bekanntmachung des Hinweises auf die Patenterteilung: **26.01.1994**
(21) Anmeldenummer: 89116844.5
(22) Anmeldetag: 12.09.1989
(51) Int. Cl.: F16C 3/00, F16C 3/10

(54) **Aufgebaute Welle**
Assembled shaft
Arbre assemblé

(30) Priorität: 03.11.1988 DE 3837291
(43) Veröffentlichungstag der Anmeldung: 09.05.1990
(73) Patentinhaber: Emitec Gesellschaft für Emissionstechnologie mbH, 53797 Lohmar (DE)
(72) Erfinder: Swars, Helmut, D-5060 Bergisch Gladbach (DE)
(74) Vertreter: COHAUSZ HASE DAWIDOWICZ & PARTNER

(56) Entgegenhaltungen:
- EP-A- 0 315 136

## Beschreibung

Die Erfindung betrifft eine aufgebaute weite, insbesondere Kurbelwelle, gemäß dem Gattungsbegriff des Anspruches 1.

Eine gattungsbestimmende aufgebaute Welle ist aus der älteren, aber nicht vorveröffentlichten EP-A-0 315 136 bekannt. In dieser Schrift ist eine aufgebaute Kurbelwelle offenbart, bei der zugeordnete Abschnitte eines Grund- oder Hubzapfens ineinandergesteckt oder aneindergesetzt auf eine gemeinsame Hülse aufgeschoben sind und bei der die Hülse unter plastischer Verformung aufgeweitet ist und in den Abschnitten der Zapfen unter elastischer Vorspannung in denselben kraftschlüssig festgelegt ist. Die Hülsen weisen einen zylindrischen Mittelabschnitt zur Anlage an die Bohrungen der Lager- bzw. Kurbelzapfen und Stirnflächenbereiche mit runden Öffnungen auf, die gegenüber dem Mittelabschnitt einen verkleinerten Außendurchmesser haben. Die Aufweitung erfolgt mittels einer in die Hülsen einschiebbaren Druckmittelsonde, die zur Abdichtung gegenüber den Hülsen mit in Nuten fixierbaren Dichtungen versehen ist. Der Wirkbereich wird durch ein auf dem Sondenkörper angeordnetes Dichtringpaar festgelegt, wobei der axiale Abstand der beiden Dichtringe der axialen Erstreckung des zylindrischen Mittelabschnittes der Hülse entspricht. Der einen kleineren Querschnitt aufweisende Hülsenfortsatz hat die Aufgabe, die zwischen der Mantelfläche der Hülsen und den Öffnungen der Lager- bzw. Kurbelzapfen im Bereich des Durchmessersprunges der Hülsen sich bildenden Ringräume zuverlässig gegen den Verlust von Schmiermitteln abzudichten.

Der Durchmesser der verwendeten Hülsen, der sich im wesentlichen am Durchmesser ausgeführter Nockenwellen, Kurbelwellen oder Getriebewellen orientiert, ist relativ groß, so daß entsprechend große Druckmittelsonden für die Durchführung des hydraulischen Aufweitens verwendet werden müssen. Die entsprechend großen Dichtungen, die nur begrenzte Standzeiten haben, sind dementsprechend relativ teuer und arbeiten bei Druckbeaufschlagung in ihren Nuten, sodaß ein Austausch relativ häufig notwendig wird. Ein weiterer Nachteil ist darin zu sehen, daß große zylindrische Ringräume abgedichtet werden müssen, wobei die Abdichtelemente unmittelbar im Bereich der plastischen Verformung liegen, so daß der zu überbrückende radiale Spalt besonders groß ist.

Hiervon ausgehend liegt der Erfindung die Aufgabe zugrunde, eine gebaute Welle der eingangs genannten Art darzustellen, bei der auch bei großen Durchmessern der vorzuspannenden Rohrkörper die Dichtungsprobleme verringert sind. Eine weitergehende Aufgabe besteht darin fertigungstechnisch einfache, keine Abdichtelemente aufweisenden Druckmittelsonden für das Rufweiten verwenden zu können.

Die Hauptaufgabe wird mit den im kennzeichnenden Teil des Anspruches 1 angegebenen Merkmalen gelöst. Vorteilhafte Weiterbildungen sind Bestandteil von Unteransprüchen.

Eine derartige Ausgestaltung der Hülsen verringert die absolute Größe der abzudichtenden Öffnung, so daß unabhängig von der Gestaltung der Dichtung im einzelnen kleine und damit kostengünstige Dichtungen oder Dichtungszonen zustande kommen. Besonders günstig erscheint hierbei, daß die Abdichtungsberiche in den Öffnungen in den Stirnflächen - anders als die bei glatten Hülsen abzudichtenden Mantelflächen - nicht selber unmittelbar der plastischen Verformung unterliegen, sondern im wesentlichen frei von Verformung sind oder bei geeigneter Ausgestaltung der Stirnflächen einer Verformung im Sinne der Verkleinerung der Öffnung unterliegen, so daß eine zusätzliche abdichtende wirkung erzielt wird. In jedem Fall wird die abdichtende Öffnung vereinfacht. Ein weiterer wesentlicher Vorteil der erfindungsgemäßen Ausgestaltung besteht darin, daß die genannten Stirnflächen bei einer Ausgestaltung der Wellen, als Kurbelwellen, die in Bereich der Zapfen ineinandergesteckt sind, Flächenteile darstellen, die an der kraftschlüssigen Verbindung teilhaben können. Hierin liegt eine ganz bedeutende zusätliche Wirkung der erfindungsgemäß gestalteten Hülsen. Als weiterhin vorteilhaft ist anzusehen, daß die Öffnungen verkleinerten durchmessers nicht koaxial in den Hülslen liegen müssen, sondern radial versetzt sein können, so daß wiederum bei Kurbelwellen durch diese Ausgestaltung erst eine wirksame Abdichtung bei sich radial deutlich überdeckenden Grund- und Kurbelzapfen möglich wird.

Nach einer ersten günstigen Ausgestaltung sind als Abdichtbereiche jeweils nach außen an die radialen Stirnflächen anschließende Zylinderansätze vorgesehen. Hierdurch ist die Möglichkleit der Verwendung von Doppelabdichtungen gegeben, wobei zwischen zwei Dichtungen ein abgestufter Gegendruck aufgebaut werden kann.

Nach einer zweiten günstigen Ausgestaltung sind die Abdichtbereiche in im wesentlichen radialen Stirnflächen mit gegenüber dem zylindrischen Mittelabschnitt vergrößerter Wandstärke ausgebildet. Auch hier ist die Möglichkeit einer sorgfältigen Abdichtung gegeben; gleichzeitig ist sichergestellt, daß die Druckbeaufschlagung die Stirnflächen nicht nennenswert verformt und zwar weder in radialer Richtung noch als axiale Ausbauchung.

Eine weitere Abwandlung geht dahin, daß die Wandstärke der Stirnflächen insbesondere stetig nach innen zunimmt. Auch hierdurch ist die Möglichkeit einer sorgfältigen Abdichtung gegeben, während die, relativ gleichmäßige radiale Verformung der Zylinderhülse auf der gesamten Länge weniger stark behindert ist.

Eine andere Ausgestaltung geht dahin, daß die Abdichtbereiche in jeweils relativ zum Mittelabschnitt axial nach innen eingezogene Stirnflächen ausgebildet ist. Dies hat den günstigen Effekt, daß eine innere Druckbeaufschlagung der Hülsen die konusförmigen Stirnflächen so verformt, daß ein zusätzlicher radialer Anpreßdruck gegenüber einer eingeführten Druckmittelsonde erzeugt wird. Hierbei kann entweder die Stirnwand bei gleichbleibender Wandstärke nach innen trichterförmig verformt sein oder es kann eine vergrößerte Wandstärke zur Vergrößerung der Dichtfläche vorgesehen sein. In besonders günstiger Weiterführung können sich die gegenüberliegenden Stirnflächen in der Mitte der Hülse nahezu berühren.

Nach noch einer günstigen Ausgestaltung sind die Stirnflächen als gesonderte konische Ringscheiben in zylindrische Hülsen eingesetzt und in deren Innenöffnung durch Verpressen und Verstemmen befestigt. Bei innerer Druckbeaufschlagung der Hülse verformen sich diese Konusscheiben in der Weise, daß sich ihre Außenrauten in die Zylinderhülse eindrücken und gleichzeitig die Durchtrittsöffnung im Sinne eines zusätzlichen Abdichtens verkleinern.

In die Abdichtbereiche in innenzylindrischer Ausgestaltung können jeweils Dichtringe eingelegt sein, die nach dem Aufweitvorgang dort verbleiben und als verlorene Teile anzusehen sind. Dies hat den Vorteil, daß diese Dichtungen von entsprechend geringerer Qualität sein können und ein unvorhergesehenes Versagen der Dichtungen nicht zu befürchten ist. die Verwendung dichtungsloser glatter Druckmittelsonden geringen Durchmessers wird hierdurch möglich.

Nach einer anderen günstigen Abwandlung können an den Eintrittsöffnungen verformbare metallische Dichtlippen ausgebildet sein, die sich beim erstmaligen und einmaligen Einschieben der Druckmittelsonde dichtend an diese anlegen, wobei infolge einer nach innen gerichteten Neigung der Dichtlippen durch die Druckaufgabe die Dicktwirkung verstärkt wird.

Eine weitere günstige Weiterbildung der vorgenannten Hülsen besteht darin, daß der Mittelabschnitt mit einer Einlage aus einem Werkstoff geringerer Streckgrenze ausgekleidet ist, der dabei eine zylindrische Innenhülse bildet. Der Vorteil dieser Ausgestaltung besteht in einer weiteren Kostenersparnis bei im wesentlichen unveränderten Wirkung. Die genannten erfindungsgemäßen Hülsen können in einem Gesenk beziehungsweise einer Stanzvorrichtung auf einfache Weise aus zunächst rein zylindrischen Rohrabschnitten hergestellt werden.

Bevorzugte Ausführungsbeispiele der Erfindung sind jeweils anhand von als Kurbelwellen ausgeführten Wellen in den Zeichnungen dargestellt.
Figur 1 zeigt eine erfindungsgemäße Welle mit Hülsen mit zylindrischen Ansätzen in zwei Ausführungen
Figur 2 zeigt eine erfindungsgemäße Welle mit Hülsen in drei verschiedenen Ausführungen
Figur 3 zeigt eine erfindungsgemäße Welle mit Hülsen in einer aufgebauten Ausführung.

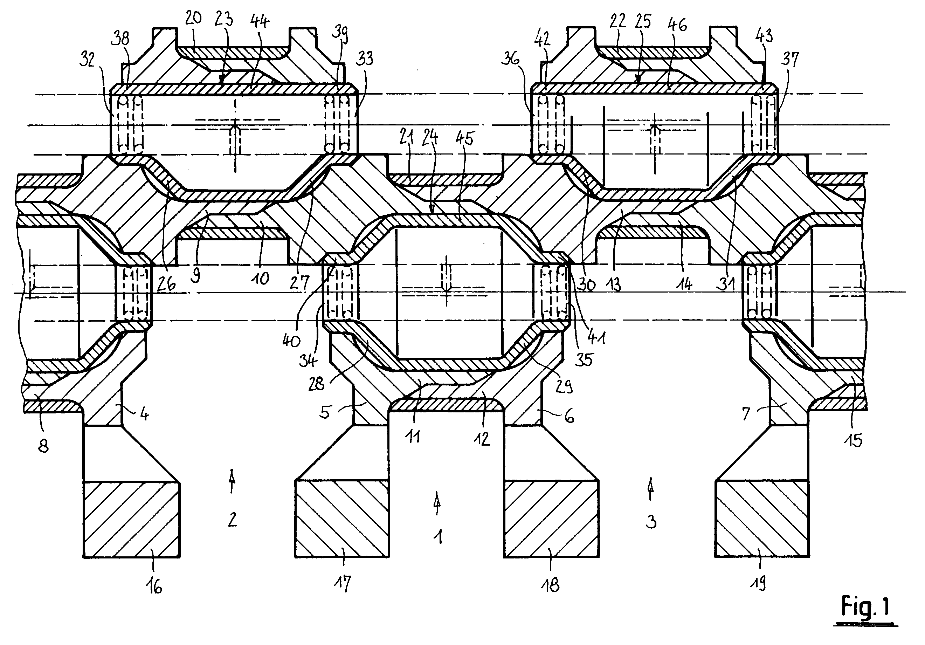

In Figur 1 ist ein Abschnitt einer Kurbelwelle mit einem Grundlagerzapfen 1 und zwei Kurbellagerzapfen 2, 3 dargestellt, die aus einzelnen Kurbelwangen 4, 5, 6, 7, mit sich daran anschließenden paarweise ineinandergesteckten Hülsenansätzen 8, 9; 10, 11; 12, 13; 14, 15 eines Grund-und eines Hauptzapfens zusammengesetzt ist. Die Kurbelwangen weisen darüberhinaus Gegengewichte 16, 17, 18, 19 auf. Die ineinandergesteckten Hülsenansätze jedes Grund- und Kurbelzapfens sind in Lagerhülsen 20, 21, 22 aus einem Material mit einer hohen Streckgrenze eingesteckt und auf erfindungsgemäße Hülsen 23, 24, 25 mit jeweils einem Mittelabschnitt 44, 45, 46 und mit in Stirnflächen 26, 27, 28, 29, 30, 31 mit darin angeordneten Öffnungen 32, 33, 34, 35, 36, 37 von gegenüber dem Hülseninnendurchmesser verkleinerten Durchmesser aufgeschoben. Die Stirnflächen sind dabei von konischer Form und die Öffnungen sind in Zylinderansätzen 38, 39, 40, 41, 42, 43 ausgebildet, von denen jeweils die Zylinderansätze 38, 39, 42, 43 in den Hubzapfen 2, 3 radial nach außen in den Stirnflächen versetzt sind, während die Zylinderansätze 40, 41 in der Hülse 24 des Grundzapfens 1 koaxial angeordnet sind. Diese Ausgestaltung läßt einen grossen tragenden Querschnitt der Kurbelwangen zu und ermöglicht die Verwendung einer einzelnen durchgehenden Sonde für jeweils alle Grundlagerzapfen und alle Hublagerzapfen gleicher Winkellage. Die leicht konischen Stirnflächen schließen mit den Kurbelwangen ringförmige oder sichelförmige Schmiermittelräume ein, die nicht näher beziffert sind. In gestrichelten Linien sind zwei in die Hülsen eingeführte Druckmittelsonden mit jeweils doppelten Dichtungen eingezeichnet.

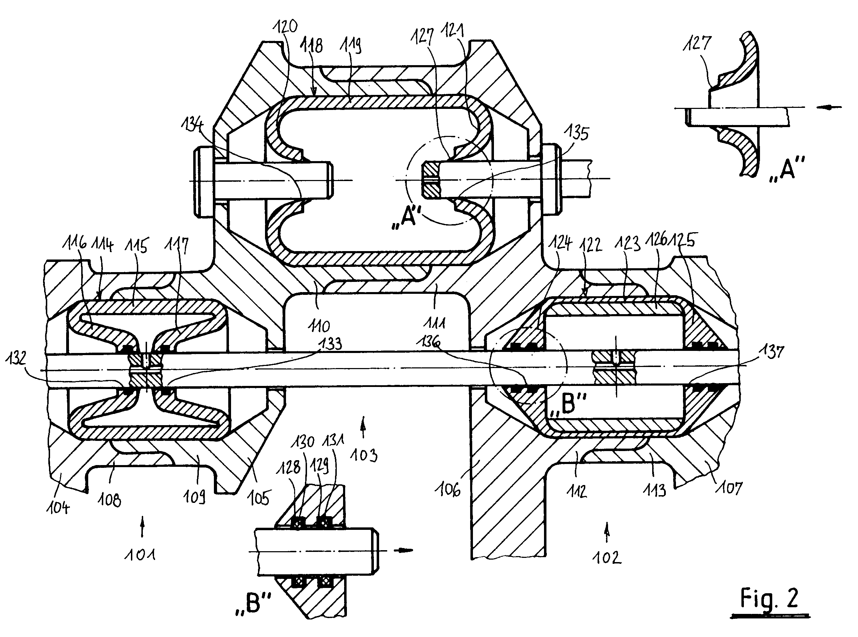

In Figur 2 ist ebenfalls ein Abschnitt einer Kurbelwelle mit zwei Grundlagerzapfen 101, 102 und einem Kurbellagerzapfen 103 dargestellt. Diese sind wiederum aus Kurbelwangen 104, 105, 106, 107 mit jeweils hülsenförmigen Ansätzen 108, 109, 110, 111, 112, 113 gebildet, deren ineinanderpassende Hülsenansätze über Hülsen 114, 118, 122 in erfindungsgemäßer Ausgestaltung zusammengesteckt sind.

Eine erste links dargestellte Hülse 114 läßt einen zylindrischen Mittelabschnitt 115 und jeweils etwa konisch nach innen gezogene Stirnflächen 116, 117 erkennen, die in der Mittelebene fast aneinanderstoßen und kleine Öffnungen 132, 133 aufweisen. Zur Verbreiterung der Abdichtbereiche sind diese Stirnflächen nach innen hin verbreitert. Es ist erkennbar, daß eine Druckbeaufschlagung mittels der durch die dünnen Linien dargestellten Druckmittelsonde die Abdichtwirkung erhöht.

Die zweite Hülse 118 im Hubzapfen läßt einen zylindrischen Mittelabschnitt 119 und bei gleichbleibender Wandstärke trichterförmig nach innen eingebogene Stirnflächen 120, 121, deren Öffnungen 134, 135 unter Eigenvorspannung an der oder den Sonden anliegen können. Bevorzugt ist hier das Einführen einer Druckmittelsonde von einer Seite und eines Gegenstopfens von der anderen Seite, da jeweils nach Einzelheit "A" eine Art verformbarer Grat als einziges Dichtelement 127 vorgesehen ist, der sich bei Einschieben einer Sonde dichtend an diese anlegt.

Die dritte rechts dargestellte Hülse 122 hat einen zylindrischen Mittelabschnitt 123 und Stirnflächen 124, 125 mit radial nach innen zunehmender Wandstärke, die in den Öffnungen 136, 132 breite Dichtungsbereiche bilden, wobei im Mittelabschnitt 123, der einstückig mit den Stirnflächen ist, eine Innenhülse 126 aus Material geringerer Streckgrenze eingesetzt ist. Als Einzelheit "B" ist die Ausgestaltung der Dichtbereiche der Hülse 122 gezeigt, die Ringnuten 128, 129 mit darin eingesetzten O-Ringen 130, 131 erkennen läßt. Diese zusätzliche Abdichtung ist aufgrund der unverformbaren Ausgestaltung der Stirnflächen vorteilhaft.

Die Öffnungen in den Kurbelwangen sind in günstiger Weise nicht größer als zur Einführung der Sonden erforderlich.

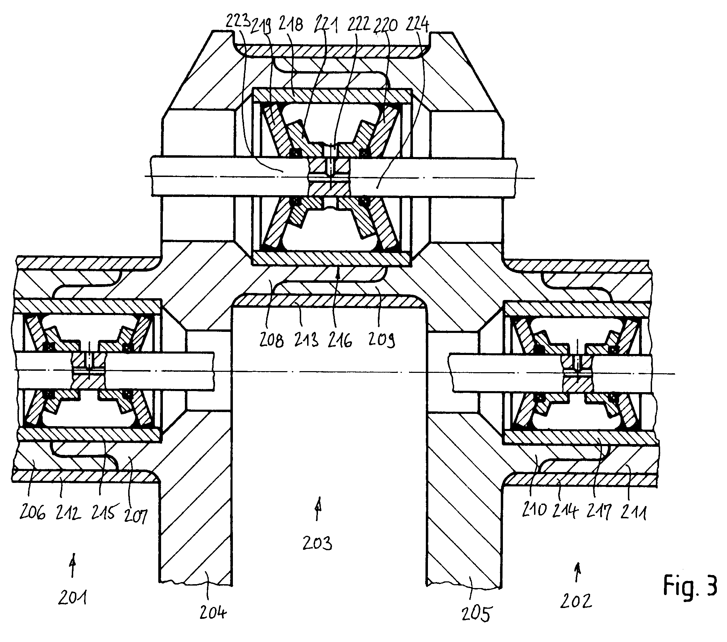

In Figur 3 ist wiederum ein Abschnitt einer Kurbelwelle dargestellt, von der zwei Grundlager 201, 202 zum Teil und ein Hublager 203 vollständig dargestellt sind. Die Kurbelwelle ist wiederum aus einzelnen Abschnitten zusammengesetzt, die Kurbelwangen 204, 205 umfassen, wobei die Kurbelwangen Hülsenansätze 206, 207, 208, 209, 210, 211 aufweisen, die sich zu vollständigen Zapfen ergänzend in Lagerhülsen 212, 213 eingesteckt und auf erfindungsgemäße Hülsen 215, 216, 217 aufgesteckt sind. Diese sind, wie ausschließlich am Beispiel der Hülse 216 erläutert wird jeweils aus einer zylindrischen Mantelhülse, 218 und darin einzeln eingesetzten konischen Stirnwandteilen 219, 220 mit Öffnungen 223, 224 aufgebaut, die in die Hülsen eingedrückt und gegebenenfalls dort festgeklebt und festgelötet sind. Ein etwa hantelförmiges Zwischenteil 221 mit einer Radialbohrung 222 kann als Abstandshalter für die konischen Stirnwände 219, 220 beim Einsetzen dienen. Grundsätzlich könnte dieses Teil jedoch auch entfallen.

## Patentansprüche

1. Aufgebaute Welle, insbesondere Kurbelwelle, bei der in Rohrkörper eingesteckte Hülsen (23-25, 114, 118, 122, 215, 216, 217) zum Verbinden ineinandergesteckter oder aneinandergesetzter Rohrabschnitte (4-7, 104-107; 204, 205) und/oder zum Festlegen auf die Rohrkörper aufgeschobener Elemente vorgesehen sind, wobei die Hülsen (23-25, 114, 118, 122, 215, 216, 217) mittels einer in sie einschiebbaren Druckmittelsonde über die Elastizitätsgrenze hinaus durch innere Druckbeaufschlagung radial verformt sind und jeweils einen zylindrischen Mittelabschnitt (44-46, 115, 119, 123, 218) zur Anlage am Rohrkörper und Stirnseiten mit runden Öffnungen (32-37, 132-137, 223, 224) aufweisen, die einen gegenüber dem Außendurchmesser des Mittelabschnitts (44-46, 115, 119, 123, 218) verkleinerten Durchmesser haben, wobei
zum Abdichten gegenüber der Druckmittelsonde die Hülsen (23-25, 114, 118, 122, 215-217) an die mit runden Öffnungen (32-37, 132-137, 223, 224) versehenen Stirnseiten (26-31, 116, 117, 120, 212, 124, 125, 219, 220) anschließende Abdichtbereiche aufweisen, die einen gegenüber dem Innendurchmesser des Mittelabschnitts (44-46, 115, 119, 123, 218) verkleinerten Durchmesser aufweisen.

2. Welle nach Anspruch 1,
dadurch gekennzeichnet,
daß die Abdichtbereiche in jeweils an die Stirnseiten (26-31) anschließenden Zylinderansätzen (38-43) liegen.

3. Welle nach Anspruch 1,
dadurch gekennzeichnet,
daß die Abdichtbereiche in im wesentlichen radialen Stirnseiten (124, 125) mit gegenüber dem Mittelabschnitt (123) vergrößerter Wanddicke ausgebildet sind.

4. Welle nach einem der Ansprüche 1 bis 3,
dadurch gekennzeichnet,
daß die Wanddicke der Stirnseiten (116, 117; 124, 125) nach innen zunimmt.

5. Welle nach Anspruch 1,
dadurch gekennzeichnet,
daß die Abdichtbereiche in jeweils relativ zum Mittelabschnitt (119) axial nach innen eingezogenen Stirnseiten (120, 121) etwa gleichbleibender Wanddicke ausgebildet sind.

6. Welle nach einem der Ansprüche 1 bis 5,
dadurch gekennzeichnet,
daß an den Abdichtbereichen plastisch verformbare Dichtlippen (127) angeformt sind.

7. Welle nach einem der Ansprüche 1 bis 5,
dadurch gekennzeichnet,
daß in die Abdichtbereiche elastische Dichtringe (130, 131) in Nuten (128, 129) eingelegt sind.

8. Welle nach einem der Ansprüche 1 bis 7,
dadurch gekennzeichnet,
daß die Hülsen (122) einen Mittelabschnitt (123) mit einer Einlage (126) aus einem zweiten Werkstoff geringerer Streckgrenze aufweisen.

9. Welle nach Anspruch 1,
dadurch gekennzeichnet,
daß die Abdichtbereiche in als konische Ringscheiben ausgeführten Stirnseiten (219, 220) ausgebildet sind, die in zylindrische Mittelabschnitte (218) eingesetzt, insbesondere eingepreßt, und verstemmt sind.

10. Welle nach Anspruch 9,
dadurch gekennzeichnet,
daß zwischen den sich gegenüberliegenden konischen Ringscheiben (218, 220) ein Distanzstück (221) mit Radialöffnung (222) vorgesehen ist.

11. Welle nach einem der Ansprüche 1 bis 10,
dadurch gekennzeichnet,
daß die Hülsen (23, 25) gegenüber dem zylindrischen Mittelabschnitt (44, 46) außermittig verlagerte Öffnungen (32, 33; 36, 37) und Abdichtbereiche haben.

12. Welle nach einem der Ansprüche 1 bis 11,
dadurch gekennzeichnet,
daß die Hülsen auch mit den Stirnseiten flächig an Teilen der Rohrkörper oder der damit verbundenen Konstruktionselemente anliegen.

13. Welle nach einem der Ansprüche 1 bis 12,
dadurch gekennzeichnet,
daß die Hülsen aus einem mit dem Material der Rohrkörper legierungsfähigen Werkstoff bestehen.

14. Welle nach einem der Ansprüche 1 bis 13,
dadurch gekennzeichnet,
daß die Hülsen aus Nichteisenmetallen oder deren Legierungen aus insbesondere Aluminium, Magnesium, Titan, Kupfer oder Messing bestehen.

## Claims

1. Assembled shaft, in particular a crankshaft, on which bushes (23-25, 114, 118, 122, 215, 216, 217) inserted into the tubular body for connecting tube sections which fit into one another or are placed one onto another (4-7, 104-107; 204, 205) and/or for fixing elements pushed onto the tubular body are provided, whereby the bushes (23-25, 114, 118, 122, 215, 216, 217) are radially deformed over and above the elastic limit by internal application of pressure by means of a pressure probe which can be inserted into them and are each provided with a cylindrical middle section (44-46, 115, 119, 123, 218) for installation on the tubular body, and end faces with round openings (32-37, 132-137, 223, 224) which have a smaller diameter in comparison to the external diameter, whereby for sealing with respect to the pressure probe, the bushes (23-25, 114, 118, 122, 215-217) are provided with sealing areas which are connected to the end faces (26-31, 116, 117, 120, 212, 124, 125, 219, 220) provided with round openings (32-37, 132-137, 223, 224), and have a smaller diameter in comparison to the internal diameter of the middle section (44-46, 115, 119, 123, 218).

2. Shaft according to claim 1, characterised in that the sealing areas are located in respective cylinder attachments (38-43) connected to the end faces (26-31).

3. Shaft according to claim 1, characterised in that the sealing areas are formed in substantially radial end faces (124, 125) with increased wall thickness compared to the middle section (123).

4. Shaft according to one of claims 1 to 3, characterised in that the face thickness of the end faces (116, 117; 124, 125) increases towards the interior.

5. Shaft according to claim 1, characterised in that the sealing areas are formed in end faces (120, 121), each axially drawn in towards the interior relative to the middle section (119), of approximately constant thickness.

6. Shaft according to one of claims 1 to 5, characterised in that plastically deformable sealing lips (127) are formed on the sealing areas.

7. Shaft according to one of claims 1 to 5, characterised in that in the sealing areas, elastic sealing rings (130, 131) are inserted into grooves (128, 129).

8. Shaft according to one of claims 1 to 7, characterised in that the bushes (122) have a middle section (123) with an inlay (126) of a second material with a lower tensile yield strength.

9. Shaft according to claim 1, characterised in that the sealing areas are formed in end faces (219, 220) formed as conical annular discs which are inserted, in particular pressed, into cylindrical middle sections (218) and caulked.

10. Shaft according to claim 9, characterised in that between the conical annular discs (218, 220) which are opposite one another, a spacing piece (221) with a radial opening (222) is provided.

11. Shaft according to one of claims 1 to 10, characterised in that the bushes (23, 25) have openings (32, 33; 36, 37) and sealing areas which are positioned off centre with respect to the cylindrical middle section (44, 46).

12. Shaft according to one of claims 1 to 11, characterised in that the bushes and also the end faces lie flat against parts of the tubular body or the constructional elements connected thereto.

13. Shaft according to one of claims 1 to 12, characterised in that the bushes are composed of a material which can be alloyed with the material of the tubular body.

14. Shaft according to one of claims 1 to 13, characterised in that the bushes are of non-ferrous metal or alloys thereof, particularly aluminium, magnesium, titanium, copper or brass.

## Revendications

1. Arbre assemblé, en particulier vilebrequin, dans lequel sont prévues des douilles (23-25, 114, 118, 122, 215, 216, 217) insérées dans des corps tubulaires pour relier des sections tubulaires (4-7, 104-107 ; 204, 205) emboîtées les unes dans les autres ou les unes sur les autres et/ou pour fixer sur les corps tubulaires des éléments rapportés, où les douilles (23-25, 114, 118, 122, 215, 216, 217) sont déformées radialement vers l'extérieur au-dessus de la limite d'élasticité par application interne de pression au moyen d'une sonde à moyen coercitif introduite dans ces dernières et comprennent chacune une section médiane (44-46, 115, 119, 123, 218) cylindrique apte à être placée sur le corps tubulaire et des faces frontales avec des ouvertures rondes (32-37, 132-137, 223, 224) qui ont un diamètre réduit vis-à-vis du diamètre extérieur de la section médiane (44-46, 115, 119, 123, 218), où, pour l'étanchéité à l'égard de la sonde à moyen coercitif, les douilles (23-25, 114, 118, 122, 215, 216, 217) comportent des zones d'étanchéité se raccordant aux faces frontales (26-31, 116, 117, 120, 212, 124, 125, 219, 220) pourvues d'ouvertures rondes (32-37, 132-137, 223, 224), zones qui présentent un diamètre réduit vis-à-vis du diamètre intérieur de la section médiane (44-46, 115, 119, 123, 218).

2. Arbre selon la revendication 1,
caractérisé en ce que les zones d'étanchéité s'étendent dans des prolongements de cylindre rapportés (38-43) se raccordant aux faces frontales (26-31) respectives.

3. Arbre selon la revendication 1,
caractérisé en ce que les zones d'étanchéité sont réalisées dans des faces frontales (124, 125) généralement radiales avec une épaisseur de paroi augmentée vis-à-vis de la section médiane (123).

4. Arbre selon l'une des revendications 1 à 3,
caractérisé en ce que l'épaisseur de paroi des faces frontales (116, 117 ; 124, 125) s'accroît vers l'intérieur.

5. Arbre selon la revendication 1,
caractérisé en ce que les zones d'étanchéité sont réalisées avec une épaisseur de paroi sensiblement constante dans des faces frontales (120, 121) respectives tournées axialement vers l'intérieur par rapport la section médiane (119).

6. Arbre selon l'une des revendications 1 à 5,
caractérisé en ce que des lèvres d'étanchéité (127) plastiquement déformables sont formées sur les zones d'étanchéité.

7. Arbre selon l'une des revendications 1 à 5,
caractérisé en ce que dans les zones d'étanchéité des bagues d'étanchéité élastiques sont disposées dans des rainures (128, 129).

8. Arbre selon l'une des revendications 1 à 7,
caractérisé en ce que les douilles (122) comportent une section médiane (123) avec une pièce rapportée (126) en un matériau de moindre limite à l'allongement.

9. Arbre selon la revendication 1,
caractérisé en ce que les zones d'étanchéité sont réalisées dans des faces frontales (219, 220) constituées sous forme de disques annulaires coniques insérés dans les sections médianes cylindriques (218), notamment introduits à la presse, et sont matées.

10. Arbre selon la revendication 9, caractérisé en ce que, entre les faces frontales (218, 220) coniques
disposées en vis-à-vis, il est prévu une pièce d'espacement (221) avec une ouverture radiale (222).

11. Arbre selon l'une des revendications 1 à 10,
caractérisé en ce que les douilles (23, 25) possèdent des zones d'étanchéité et des ouvertures (32, 33 ; 36, 37) décalées d'un intervalle extérieur vis-à-vis de la section médiane (44, 46) cylindrique.

12. Arbre selon l'une des revendications 1 à 11,
caractérisé en ce que les manchons s'étendent également au même niveau que les faces frontales sur des parties des corps tubulaires ou d'éléments de construction reliés à ceux-ci.

13. Arbre selon l'une des revendications 1 à 12,
caractérisé en ce que les manchons sont réalisés en un matériau susceptible d'être allié à la matière des corps tubulaires.

14. Arbre selon l'une des revendications 1 à 13,
caractérisé en ce que les manchons sont réalisés en métaux non-ferreux ou leurs alliages, en particulier en aluminium, magnésium, titane, cuivre ou laiton.
